# EUROPEAN PATENT SPECIFICATION

(11) **EP 4 087 373 B1**
(45) Date of publication and mention of the grant of the patent: **07.01.2026**
(21) Application number: 21171798.8
(22) Date of filing: 03.05.2021
(51) Int. Cl.: H05G 2/00, H01S 3/00

(54) **METHOD AND DEVICE FOR GENERATING SHORT-WAVELENGTH RADIATION**
VERFAHREN UND VORRICHTUNG ZUR ERZEUGUNG KURZWELLIGER STRAHLUNG
PROCÉDÉ ET DISPOSITIF POUR GÉNÉRER UN RAYONNEMENT À COURTE LONGUEUR D'ONDE

(43) Date of publication of application: 09.11.2022
(73) Proprietor: UAB Light Conversion, 10233 Vilnius (LT)
(72) Inventor: Rimkus, Lukas, 08433 Vilnius (LT); Stasevicius, Ignas, 03127 Vilnius (LT); Vengris, Mikas, 10222 Vilnius (LT)
(74) Representative: Klimaitiene, Otilija

(56) References cited:
- US-A1- 2021 026 254
- YIN LIANG ET AL: "Using Temporally Synthesized Laser Pulses to Enhance the Conversion Efficiency of Sn Plasmas for EUV Lithography", IEEE PHOTONICS JOURNAL, IEEE, USA, vol. 13, no. 1, 31 December 2020 (2020-12-31), pages 1 - 15, XP011835670, DOI: 10.1109/JPHOT.2020.3047093
- SJ�GREN A ET AL: "High-repetition-rate, hard x-ray radiation from a laser-produced plasma: Photon yield and application considerations", REVIEW OF SCIENTIFIC INSTRUMENTS, AIP, MELVILLE, NY, US, vol. 74, no. 4, 1 April 2003 (2003-04-01), pages 2300 - 2311, XP012040770, ISSN: 0034-6748, DOI: 10.1063/1.1544054
- GANEEV RASHID A ET AL: "High-order harmonic generation during propagation of the double-pulse beam through the drilled thin films", APPLIED PHYSICS A MATERIALS SCIENCE & PROCESSING, SPRINGER BERLIN HEIDELBERG, BERLIN/HEIDELBERG, vol. 119, no. 4, 8 April 2015 (2015-04-08), pages 1231 - 1236, XP035498941, ISSN: 0947-8396, [retrieved on 20150408], DOI: 10.1007/S00339-015-9160-X
- ZIENER CH ET AL: "Novel device for the generation of controlled prepulses in a Ti:sapphire laser amplifier chain", REVIEW OF SCIENTIFIC INSTRUMENTS, AMERICAN INSTITUTE OF PHYSICS, 2 HUNTINGTON QUADRANGLE, MELVILLE, NY 11747, vol. 71, no. 9, 1 September 2000 (2000-09-01), pages 3313 - 3316, XP012038484, ISSN: 0034-6748, DOI: 10.1063/1.1287049

## Description

### FIELD OF INVENTION

This invention discloses a method and device for generating X-rays, by inducing these types of high-energy electromagnetic radiation with a laser beam applied onto a target, where the laser beam is formed by using specific burst configurations of light pulses, for increased generation efficiency.

### BACKGROUND ART

Generating short-wavelength radiation, in particular X-ray and Extreme Ultraviolet (EUV), by use of laser beams directed to a target is known from a variety of prior art sources - patents, patent applications, and scientific papers or articles.

The photon energies of the EUV fall in the range of 0.01 - 0.2 keV. EUV light has applications in imaging, absorption spectroscopy, and other applications. EUV radiation with a wavelength of 13.6 nm (0.09 keV) finds application in extreme resolution lithography. Hard and soft X-ray radiation with photon energies in 0.2 - 20 keV range finds applications in structural dynamic studies of materials, in particular X-ray absorption spectroscopy and X-ray diffraction imaging [1]. When an intense femtosecond laser pulse interacts with a solid target, hot and dense plasma is created with an emission spectrum consisting of *Bremsstrahlung* induced continuum and target material characteristic X-ray lines called K_{α} and K_{β} lines. Plasma X-ray sources are the most popular lab-based sources that deliver femtosecond X-ray pulses perfectly synchronized to an infrared laser pulse. As the source volume is small (depending on the focused infrared laser pulse spot size), they also feature high source brightness. Nevertheless, the flux on the sample is low, because the generated X-ray radiation is spatially incoherent and is emitted isotropically into full 4π solid angle. Only a part of the emitted radiation can be collected and used in the experiments. To increase the flux to the usable values, conversion efficiency from infrared radiation to X-ray radiation needs to be increased.

Commercial applications, such as X-ray / EUV absorption spectrometers or phase contrast imaging systems, require a low price, table top, and simple operation X-ray / EUV light source. A vacuum-free environment is also preferable. Vacuum-free generation is enabled for the hard X-ray wavelengths, which are transmitted in the air. The soft X-ray / EUV wavelengths need to be adjusted by proper target material choice for maximum transparency of the generated soft X-Ray / EUV at the air atmosphere. One particular wavelength range is 2.3 - 4.3 nm (0.3 - 0.5 keV), called a water transmission window for the soft X-ray / EUV. A state-of-the-art X-Ray / EUV generation system may require a couple of laser sources, which share separate resonator cavities. Therefore, the pulse synchronization and the beam pointing accuracy need to be controlled. Furthermore, mechanical perturbations could lead to differing energy variations, if two laser sources are simultaneously used. Therefore, a single laser source for the X-ray / EUV generation process is highly desired.

To reach high photon flux per shot, the laser source should have high peak power and should be focused on a small spot size to reach high infrared light intensity at the target plane. An increase in the repetition rate of the laser is another way to increase the average flux, but this adds a considerable heat load to the laser source, limiting the achievable laser source beam quality. While these measures simply aim to maximize the light intensity at the target, the yield of produced X-rays for a fixed laser pulse energy can also be increased by adjusting the gradient of plasma density. This is achieved via deliberately introduced smaller energy prepulse or several pre-pulses which arrive to the sample before the main pulse. An optimal prepulse delay Δ*t* depends on the pulse duration, spot size, and plasma dynamics because the pre-pulse initiates a plasma cloud which then expands and interacts with the main pulse. If the beam sizes of the pre-pulse and the main pulse are equal, the relative delay of the pulses should be small enough, so that the pre-pulse generated plasma does not dissipate before the main pulse arrives. The same argument applies for the pulse durations of the interacting pulses, short pulse durations lead to higher plasma expansion speed, which requires a small relative pulse delay.

The requirement of the in-band EUV wavelength of 13.6 nm with 2 % central wavelength bandwidth at 2π solid angle is determined by the reflection properties of the Molybdenum-Silicon mirrors. Efficient generation of this narrow-band wavelength requires a specific target (preferably Sn), target material atom ionization level (preferably Sn ⁸⁺ - Sn ¹⁴⁺ ), and plasma temperatures (preferably 20-40 eV) [2]. A choice of these parameters favors longer pulses with nanosecond durations and consequently longer pre-pulse and main pulse relative pulse delays, reaching nanosecond durations. These parameters lead to lower plasma temperatures which allow efficient excitation and recombination to the required atomic energy levels. On the other hand, an efficient broadband EUV and X-ray emission favors shorter pulse durations and shorter relative pulse delays. Higher EUV and X-ray photon energies require larger plasma temperatures to efficiently excite and recombine into deeper lying atomic energy levels. Therefore, femtosecond-picosecond range pulse durations with picosecond-nanosecond range intra-pulse delay are sought-after, the exact parameters of which are determined by the required EUV and X-ray photon energies.

Numerous scientific papers have shown broadband EUV or X-ray emission increase by using a deliberately shaped prepulse. In the work by Bastiani *et al.* [3], a maximum conversion efficiency to K_{α} in SiO₂ target was demonstrated for a prepulse delay of Δ*t* ~ 6 ps while using pulse durations of 120 fs and 60 mJ pulse energy for the main pulse (4 x 10¹⁶ W/cm² intensity of the focused beam). The prepulse was formed externally by a partially reflecting mirror, and the paths of two pulses (prepulse and main pulse) were arranged to have the prepulse arrive at the target at an appropriate time before the main pulse. This required subtle beam direction matching to ensure spatial overlap at the focal plane. What is more, a mirror with a hole was used to form a prepulse, this deteriorated the main pulse beam quality. With an optimal prepulse delay of 6 picoseconds, the X-ray generation efficiency increased 7 times compared to the case when no prepulse is used. The prepulse beam area was ~30 times larger than the main pulse beam area, therefore the beam sizes were mismatched.

Various research groups have investigated the generation of plasma initiated X-ray in materials with varying Z-numbers: Remeikis *et al.* [4] group investigated copper (K_{α} ~ 8 keV), platinum (K_{α} ~ 59 keV), tungsten (K_{α} ~ 66 keV), alkali metal halide salts (KBr, NaBr, KI, Nal, and Csl) (K_{α} ~ 3 - 30 keV); Sentis *et al.* [5] group investigated Molybdenum (K_{α} ~ 17 keV). Various research groups have investigated the generation of plasma initiated extreme ultraviolet for the EUV projection lithography wavelength of 13.6 nm in various materials: liquid xenon [6], liquid jet [7], droplet target [8], and others.
Rotating solid target geometry preserves a sample and prepares a fresh spot for every incident pulse. Liquid targets were shown to produce a high conversion to X-ray increase of 10³-10⁴ times with an applied prepulse at an optimal 4 ns delay time and main pulse intensity of 10¹⁵ W/cm² [9]. On the other hand, liquid jet or droplet targets are harder to implement for a tabletop device.

In the work by Uryupina et al. [10], a fixed prepulse delay of Δ*t* ~12.5 ns was applied while using pulse durations of 55 fs and 1 mJ of main pulse energy (4 x 10¹⁶ W/cm² intensity of the focused beam). The prepulse was formed externally by a partially reflecting mirror, and the paths of two pulses (prepulse and main pulse) were arranged to have the prepulse arrive at the target at an appropriate time before the main pulse. This required subtle beam direction matching to ensure spatial overlap at the focal plane. The X-ray generation efficiency increased 80 times compared to the case when no prepulse was used in copper and gallium targets in the vacuum chamber. The prepulse and main pulse beam sizes were matched at the focal plane.

In the work by Ziener et al. [11], a maximum conversion efficiency to K_{α} in SiO₂ target was demonstrated for a prepulse delay of Δ*t* ~80 ps while using pulse durations of 80 fs and 30 mJ pulse energy for the main pulse (8 x 10¹⁶ W/cm² intensity of the focused beam). The prepulse was formed externally by a partially reflecting mirror, and the paths of two pulses (prepulse and main pulse) were arranged to have the prepulse arrive at the target at an appropriate time before the main pulse. This required subtle beam direction matching to ensure spatial overlap at the focal plane, what is more, a highly elliptic beam was focused at the focal plane. The prepulse and main pulse sequence were amplified in a multipass amplifier. With an optimal prepulse delay of 80 picoseconds, the X-ray generation efficiency increased 2 times compared to the case when no prepulse is used.

The US patent US20200084870A1 by D. E. Hudgins *et al.* "Method and device for generating electromagnetic radiation by means of a laser-produced plasma", discloses a laser source that irradiates a target material with a prepulse formed from a sequence of pulses with four to nine pulses with below Δ*t* =100 ns delay between the pulses. Laserinduced plasma generates EUV and X-ray radiation. Less than 999 ps pulse duration pulses are claimed, but no experimental results are presented of efficiency increase with a prepulse to main pulse delay in the range of 50 ps to 10 ns. The disclosed laser source involves the oscillator, modulator, and an amplifier system, which generates a sequence of pulses forming an envelope. The sequence of pulses is generated by modulating the oscillator output by a modulator and forming the sequence of pulses. One disadvantage of the said invention is that the minimum time duration between the pulses in a sequence is fixed by oscillator cavity arrangement, namely, by the repetition rate of the oscillator. Therefore, a variable time separation between the pulses under the envelope is hard to implement flexibly in timescales from picosecond to nanosecond pulse durations. For instance, 200 ps pulse delay between the pulses would require an oscillator featuring 5 GHz repetition rate. Such high repetition rate would present significant challenges if such an oscillator was used as a seed source in a chirped pulse amplification system.

Another US patent US10588210B1 by Vinkhodov *et al.* "High brightness short-wavelength radiation source (variants)" discloses a rotating target illuminated by a laser source to generate X-ray radiation. The prepulse and main pulse pair is used for the generation with less than Δ*t* =10 ns between the pulses, nanosecond pulse duration pulses are claimed. An invention claims debris mitigation while using a prepulse because a prepulse substantially lowers the resulting ion energies. X-ray generation efficiency increase while using a prepulse is not discussed. The exact experimental scheme of the main pulse and prepulse generation is not disclosed.

Another US patent US10172225B2 by Suzuki *et al.* "Extreme ultraviolet light generation apparatus" discloses a laser system for EUV generation with laser-produced plasma. In-band EUV light is generated, therefore nanosecond pulse durations are used for optimal spectral in-band excitation efficiency. The numbers of efficiency increase while using a prepulse are not disclosed. A droplet type target material is illuminated by a pair of variable delay separated laser pulses - a prepulse and the main pulse. Two laser sources are used in this embodiment (CO₂ material pulse at 10.6 µm central wavelength and Nd:YAG material pulse at 1.064 µm central wavelength). The authors also disclose a laser system for EUV generation where a number of pre-pulses are applied to the target material before the main pulse. The disclosed invention uses an individual laser source for each of the pulses, the delay is variable between the laser pulses by a delay line. As each prepulse requires a separate laser source, the beam pointing and time synchronization of each of the laser sources has to be accurately controlled to ensure the prepulse and main pulse overlap at the target plane.

PCT application WO2020178244A1 by Fomenkov et al*.* "LASER SYSTEM FOR SOURCE MATERIAL CONDITIONING IN AN EUV LIGHT SOURCE", discloses a system for EUV in-band generation at droplet target, nanosecond pulse durations are used for optimal spectral in-band excitation efficiency. The numbers of efficiency increase while using a prepulse are not disclosed. Pre-pulse and main pulse sequence are formed by using one or two separate laser sources which emit two pulses with the variable time delay between them. A beam splitter and delay line are used to vary the delay between the prepulse and the main pulse. Usage of the beamsplitters for beam delay requires careful beam spatial overlap of both of the pulses. The beam pointing and time synchronization of each of the laser sources has to be accurately controlled to ensure the prepulse and main pulse overlap at the target plane. Using a 50/50 beamsplitter to combine two pulses lead to 50 % energy losses of the pulses. If polarization coupling is used, the polarizations of both of the pulses are orthogonal, which may be an issue for a non-zero angle of incidence applications.

In the work by Yin et al. [12] a double pulse sequence, which was used for the investigation of EUV emission, was obtained with a programmable pulse synthesizer based on a diode-pumped chirped pulse amplification Yb:YAG laser. The Sn laser-produced plasmas were created by focusing 250 ps pulses into 150 µm spots. Firstly, the Sn target was irradiated with a 40 mJ energy laser pulse and after a selected delay ranging from 0 ns to 3 ns it was irradiated with a second laser pulse of equal energy to re-heat the Sn laser-produced plasma. The temporally integrated EUV emission from the two-pulse sequence increased by ~30%, compared to that from a single pulse of the same energy that was observed at an optimal delay of 2.1 ns.

The US application US20210026254A1 by Kobayashi and Hosoda "Extreme ultraviolet light generation system and electronic device manufacturing method" discloses a laser system that irradiates a droplet shaped target with two or three pre-pulses and main pulse sequence in a chamber for EUV light generation. Pre-pulses and main pulse sequence is formed by using three separate laser sources. In this patent some modifications are described, wherein the first pre-pulse laser includes a regenerative amplifier. These modifications enable the generation of the first pre-pulse and the second pre-pulse with the first pre-pulse laser. Then the third pre-pulse was generated with the second pre-pulse laser and the main pulse was generated with the main pulse laser. A control unit configurated to control the laser system so that a first delay time from a timing of irradiation of the target with the first pre-pulse laser beam to a timing of irradiation with the second pre-pulse laser beam is shorter when and a second delay time from the timing of irradiation of the target with the second pre-pulse laser beam to a timing of irradiation with the main pulse laser beam. However, this application discloses the delay between two pulses of 10 nanoseconds, further, the disclosed invention exposes generating of EUV-only radiation, furthermore, in this patent document, the individual laser sources are used for each of pulse.

In all the prior art references disclosed up to this point, a relatively low-efficiency increase of EUV or X-ray generation was disclosed while using the pre-pulse at various delay times for the solid targets. Low efficiency required high intensities which are close to an air ionization threshold, limiting the delivered energy if no vacuum is applied.

In all the prior art references disclosed up to this point, none of EUV or X-ray generation devices discuss an oscillator and a regenerative amplifier arrangement, which does not allow a substantial decrease of the driving intensity. What is more, a state-of-the-art EUV / X-ray generation system may require a couple of laser sources to separately generate the pre-pulse and main pulse pair, which share separate resonator cavities. Therefore, the pulse synchronization and the beam pointing accuracy need to be controlled. Another state-of-the-art configuration involves a beam splitter pair that reflects part of the pulse, delays it, and recombines both the pre-pulse and the main pulse beams. This induces reflection losses if parallel polarization pre-pulse and main pulse sequence are required. What is more, the beam pointing needs to be carefully aligned for both prepulse and the main pulse beams. Moreover, if more than one pre-pulse is needed, the system reflection losses and alignment complexity increases gradually with the number of pre-pulses. These disadvantages add complexity to the X-ray / EUV generation system.

Further reference is made to
ZIENER CH ET AL: "Novel device for the generation of controlled prepulses in a Ti:sapphire laser amplifier chain",REVIEW OF SCIENTIFIC INSTRUMENTS, AMERICAN INSTITUTE OF PHYSICS, 2 HUNTINGTON QUADRANGLE, MELVILLE, NY 11747, vol. 71, no. 9, 1 September 2000 (2000-09-01), pages 3313-3316
   and to
GANEEV RASHID A ET AL: "High-order harmonic generation during propagation of the double-pulse beam through the drilled thin films",APPLIED PHYSICS A MATERIALS SCIENCE & PROCESSING, SPRINGER BERLIN HEIDELBERG, BERLIN/HEIDELBERG, vol. 119, no. 4, 8 April 2015 (2015-04-08), pages 1231-1236.

**Solution to the problem and advantageous effect of the invention.** Claim 1 defines the method for generating X-ray range electromagnetic radiation according to the invention and claim 10 defines the device for generating the X-ray range electromagnetic radiation according to said method. Preferred embodiments are defined by the dependent claims. This application discloses an experimental finding of a substantial X-ray generation efficiency increase by more than 250 times by using an optimal time delay of around Δ*t* ~100 - 200 ps for our prepulse and main pulse experimental configuration. A solid target at ambient atmosphere was used, exciting it with 4 x 10¹⁴ W/cm² driving intensities. The invention discloses the application of an oscillator and a regenerative amplifier arrangement, to generate bursts of pulses. The burst of pulses acts as a sequence of plasma initiating pre-pulse and the main pulse. The matching of the oscillator and regenerative amplifier lengths allows variable intra-pulse delay Δ*t* = T_{RA-OSC} = |T_{RA} - T_{OSC}|, whereas the adjustment of electro-optic modulator parameters in the amplifier allows the adjustable main pulse to pre-pulse amplitude ratio. As both of the pulses originate from the same regenerative amplifier cavity, the beam pointing stability and spatial overlap of both of the beams are ensured automatically. As the pulses originate in the same cavity and propagate through the same optical components, both the pre-pulse and the main pulse have the same polarization. An embodiment is disclosed of a laser system with a fiber or solid state based burst generation unit before a master amplifier, generating burst of pulses, which acts as a sequence of plasma-initiating pre-pulse and the main pulse. Irrespectively of the laser system configuration, the pre-pulse and main pulse sequence with 200 ps intra-pulse delay allows one to have a substantial conversion efficiency of 10⁻⁴ without reaching air ionization threshold. This enables a vacuum-free operation of the device. What is more, lower pulse energy and burst mode operation diminishes the debris generation and increases the lifetime of the target. Furthermore, the nanosecond and picosecond pulse generation capability as well as a variable number of pre-pulses lead to a flexible parameter space that could be used to optimize the X-ray / EUV generation under varying experimental conditions, such as target material or focused beam size.

### DESCRIPTION OF DRAWINGS

The drawings are provided as a reference to possible implementations and are not intended to limit the scope of the invention. Neither of the drawings and the graphs presented herein should be construed as limiting the scope of the invention, but merely as an example of a possible embodiment.
- **Fig. 1**: shows the experimental setup for short-wavelength generation comprising an oscillator, regenerative amplifier, and a focusing lens to deliver light to the target, where short-wavelength generation takes place. The excerpt shows the main pulse and pre-pulse sequence used in the process.
- **Fig. 2**: shows the pulse sequence used in the short-wavelength generation process with different time scales for picosecond, nanosecond, and microsecond interpulse time delay.
- **Fig. 3**: shows the direct measurements of the X-ray emission spectra using Si PIN photodiode in the single-photon counting regime: a) copper, b) stainless steel, and c) molybdenum metallic targets were investigated.
- **Fig. 4**: shows the intensity dependence of the generated X-rays on the pre-pulse to main pulse energy ratio, at 900 µJ total energy of the burst.
- **Fig. 5**: shows the intensity dependence of the generated X-rays on the pre-pulse to main pulse delay at various pulse repetition rates, in the delay range from 10 ps to 1600 ps.
- **Fig. 6**: shows the spectra of generated X-rays with and without the pre-pulse.
- **Fig. 7**: shows the dependence of generated X-ray intensity and generation efficiency on the intensity of the main pulse.
- **Fig. 8**: shows the long-term performance of the presented X-ray source presenting the time dependence of the generated X-ray intensity with and without the pre-pulse.
- **Fig. 9**: shows the long-term performance of the presented X-ray source presenting the time dependence of the generated X-ray spectra with and without the pre-pulse.
- **Fig. 10**: shows the scheme used for generating simultaneous microsecond- and picosecond- bursts of pulses.
- **Fig. 11**: shows generated X-ray photon intensity dependence on the number of pulses in a microsecond and picosecond burst pulse packet while retaining the same average beam power.
- **Fig. 12**: shows the experimental setup for short-wavelength generation comprising an oscillator, burst generation unit, master amplifer and a focusing lens to deliver light to the target, where short-wavelength generation takes place. The excerpt shows the main pulse and pre-pulse sequence used in the process.

### DRAWINGS - Reference numerals

- **1**: ultrashort pulse oscillator;
- **2**: regenerative amplifier with internal modulator;
- **3**: regenerative amplifier output beam path;
- **4**: regenerative amplifier emitted pulse sequence with Δ*t* time duration between the pulses in a burst, t₀ - time duration between the bursts, A₁ - pulse energy ratio respectively between the first and the second pulse;
- **5**: mirror and/or scanner system;
- **6**: lens or system of lenses;
- **7**: target material;
- **8**: emitted short-wavelength electromagnetic radiation;
- **9**: monitoring spectrometer or collection optics, or sample chamber;
- **10**: a sequence of pulses with millisecond/microsecond range delay t₀ between the burst packets, nanosecond range delay between the bursts, and picosecond range delay between the pulses in a burst;
- **11**: a zoomed sequence of pulses with millisecond/microsecond range delay between the burst packets, nanosecond range delay t_{RA} between the bursts, and picosecond range delay T_{RA-OSC} between the intra-burst pulses with a variable main pulse to Nₜₕ pre-pulse amplitude ratio A_{N}.
- **12**: a sequence of bursts with T_{RA-OSC} delay between the pulses in a burst and t₀ delay between the burst packets. The packets are formed with one main pulse and prepulse pair (N = 1).
- **13**: a sequence of bursts with T_{RA-OSC} delay between the pulses in a burst, t₁ delay between the bursts, and t₀ delay between the burst packets. The packets are formed with two main pulse and pre-pulse pairs (N = 2).
- **14**: a sequence of bursts with T_{RA-OSC} delay between the pulses in a burst, t₁ delay between the bursts, and t₀ delay between the burst packets. The packets are formed with four main pulse and pre-pulse pairs (N = 4).
- **15**: fiber or solid state ultrashort pulse oscillator.
- **16**: fiber or solid state burst generation unit.
- **17**: fiber or solid state master amplifier.

### DETAILED DESCRIPTION OF INVENTION

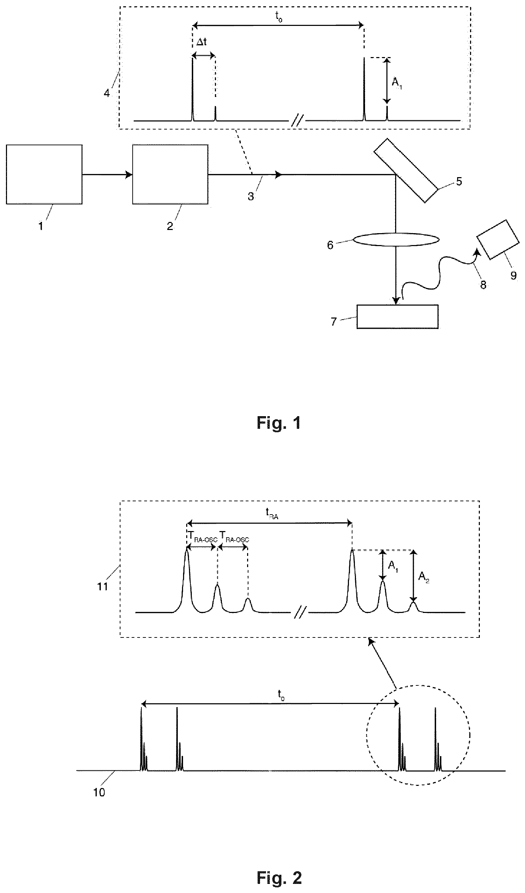

Fig 1. illustrates the schematics embodiment of the laser system **1-2,** the beam delivery setup **5-6,** illumination target **7,** and the emitted short-wavelength radiation 8 collection or diagnostics setup **9 used** for an example case of X-ray generation.

**Creating laser pulses.** The laser system comprises a mode-locked ultrashort-pulse femtosecond laser master oscillator **1,** which emits pulses with nanosecond range temporal distance (for example, 12.5 ns for 80 MHz repetition rate). The length of the oscillator **1** cavity determines the temporal distance between the generated ultrashort pulses. The gain medium bandwidth and central wavelength determine the central wavelength and the pulse duration of the pulses. Gain medium may be embodied as a rear-earth metal (ytterbium, neodymium, thulium, and other) doped laser medium (e.g. Yb: KYW, Yb: KGW, Nd: YVO, Tm: YAG) in fiber, slab, or thin-disk laser material arrangement. These materials and arrangements are provided as examples only, the selection of gain medium and central wavelength should not limit the scope of this invention. In an example embodiment, oscillator **1** generates pulses at 1030 nm central wavelength with 10 nJ pulse energy, 120 fs pulse duration, and 76 MHz pulse repetition rate (13.15 ns pulse period).

**Generating burst of pulses.** The laser pulses emitted by a master oscillator **1** are injected through a polarizer into a regenerative amplifier **2.** The regenerative amplifier **2** operation principle is disclosed in the patent application GB2562236/ WO2018207042A1 by Barkauskas et al*.* "Device and method for generation of high repetition rate laser pulse bursts". This document discloses a laser system exploiting an electro-optical switch to generate single or multiple bursts of pulses with a variable amplitude ratio of the pulses in the burst. The time duration between pulses in the burst is determined by the difference of round trip durations of the oscillator **1** cavity τ_{OSC} and regenerative amplifier **2** cavity τ_{RA}.

This laser device (1**,2,3**) comprises at least a master oscillator **1** with a pulse repetition period Tosc, and a regenerative amplifier (RA) **2** with a pulse-round-trip time T_{RA}, further comprising an electro-optical switch. First, the electro-optical switch is switched by its control voltage into an intermediate state for a time interval exceeding T_{RA}, during which the electro-optical switch is partially transmissive, and more than one pulses from the master oscillator **1** can be injected into RA **2.** The first injected pulse is circulated with its partial intensity within the RA **2,** while further at least one more pulse is injected into RA **2** and aligned before or after the circulated first pulse, whereby the time-gap Δ*t* between the aligned first and at least one more second pulses in the regenerative amplifier **2** is adjusted as *Δt* = T_{RA-OSC}= |T_{RA} - T_{OSC}| by means of the master oscillator **1** and/or the regenerative amplifier **2.** The amplitudes of the pulses in this burst are adjusted through control of the amplitude or slope of the control voltage of the electro-optical switch, during the pulse injection interval.

Further, said electro-optical is switched to lock the RA **2** for burst amplification, for a time period sufficient to gain the energy of the burst.

Further, the electro-optical switch is switched into a state in which it is completely transmissive thus allowing ejection of single amplified burst, or to a state in which it is partially transmissive thus allowing ejection of multiple amplified bursts, from the regenerative amplifier **2** to the target **7** material.

The round-trip time T_{RA} of the regenerative amplifier **2** is selected to allow the shortest required time delay **t₁** between bursts in the multiple burst (for N= 2, 4), ejected from the regenerative amplifier **2.**

Several amplified fast bursts of pulses can be ejected with T_{RA-OSC}= |T_{RA} - T_{OSC}| delay (picosecond-nanosecond scale) between the pulses in the burst and with T_{RA} delay (nanosecond scale) or t₁ delay (microsecond scale) between the bursts and t₀ delay (microsecond-millisecond scale) between the burst packets.

Thus, in an example embodiment of the burst generator, in the case of oscillator **1** with 13.15 ns round trip duration and regenerative amplifier **2** with 13.55 ns round trip duration, the injected burst pulses would have T_{RA-OSC} = 400 ps time duration between the pulses in the burst.

In one embodiment, the amplified laser burst may be ejected fully through a single regenerative amplifier **2** round trip. In another embodiment, the amplified laser burst may be ejected partially on each regenerative amplifier **2** cavity round trip. Thus, a multiple burst may be formed and the bursts are separated by a cavity round trip time T_{RA} of the regenerative amplifier **2** cavity. This is shown in an example embodiment pulse sequence **11** of Fig. 2. In this example embodiment, the time between the burst packets could be t₀ = 500 ns with 2 bursts forming a burst packet, t_{RA} = 13.55 ns between the bursts, T_{RA-OSC} = 400 ps between the pulses in a burst with 3 pulses forming a burst. When applied to a sample, these time domains enable simultaneous exploitation of different physical effects with largely different time constants. Furthermore, at high regenerative amplifier **2** pulse repetition rates, the plasma near the target **7** plane is in a quasi-equilibrium state, which may shield the target **7** from the incoming pulses or serve as a secondary target for increasing the efficiency of X-ray generation. The regenerative amplifier **2** allows shaping the pulse train with kilohertz modulation rate to control the density of the plasma or the state of the target **7** at high pulse repetition rates.

The burst of pulses is emitted through output **3** of the regenerative amplifier **2.** An example embodiment of a generated pulse sequence is shown in **4.** In this case, a single burst with N = 2 pulses and Δ*t* = T_{RA-OSC} picosecond-domain delay between the pulses is generated with a burst period of t₀. A controllable burst envelope is formed in the regenerative amplifier **2,** leading to a controllable amplitude ratio A₁ of the main pulse to the leading pre-pulse.

As all the pulses originate from a single regenerative amplifier 2 resonator cavity, the beam properties at the output **3** of all the pulses in the burst are the same. The beam properties include the beam widths and divergences, polarization, beam positions, and directions. This is an important part of a short-wavelength radiation generation application as preferably the pre-pulse and main pulse beams should overlap at the sample plane. The work by Fujimoto et al. [13] showed that a decrease in the beam spot size at the target leads to a decrease in debris generation. The work by Gambari *et al.* [14] showed that small beam spot size leads to an increase of the X-ray source spatial coherence, which could be exploited to enable phase-contrast X-ray imaging. Naturally, small beam sizes also enable high driving intensities. Therefore, smaller beam sizes at the target are preferable, but the decrease of the beam size leads to a more stringent requirement of the matching beam properties of the main pulse and several pre-pulses.

Furthermore, as both of the pulses share the same regenerative amplifier **2** resonator cavity, the mechanical vibration noise impacts both of the pulses simultaneously. This is important, because a small difference in pulse energy, or spatial overlap between the prepulse and the main pulse, can lead to a substantial change of the short-wavelength radiation **8** generation. One example of the source of vibrations may be the target **7** renewal system (e.g. target rotator) if it is implemented physically close to the laser system and the vibrations are not damped sufficiently.

The output **3** pulses may be subject to harmonic generation or optical parametric amplification to extend the wavelength range from UV (200 nm) up to mid-infrared (16 000 nm). The harmonic generator or optical parametric amplifier should be designed to effectively wavelength convert pulses with different pulse amplitude ratios. These various wavelength ranges may be exploited to effectively transfer energy to the target **7** by tuning the wavelength to the wavelength absorption range of the target **7** or tuning the wavelength away from high reflection wavelength range of the target **7.** The short-wavelength radiation **8** generation could as well be increased by the wavelength tuning to mid-IR wavelengths in order to increase the plasma electrons energy, which scales as a square of the driving wavelength.

**Delivering pulse bursts to the target.** The burst of pulses is delivered using the beam delivery optics **5** and the focusing lens **6,** the exact optical setup is not limited to this embodiment. The beam delivery optics **5** may include a number of mirrors. The beam delivery optics may include a mechanical, galvano, resonant, MEMS, or another type of scanner to scan the beam at the target **7** plane. The focusing lens **6** optics may include a number of optical elements, such as an objective lens, beam collimation optics or other types of beam divergence changing optics.

The beam is focused on target **7,** which could be chosen from a range of materials, such as tin, iron, copper, molybdenum, inert gasses, or various saline solutions. A material could be delivered in a solid-state, liquid, or gaseous state, in the form of a solid disk, droplet, or jet target. For target **7** renewal purposes, the solid-state target could be rotated to provide a fresh spot for laser and plasma interaction. In an example embodiment, target **7** is a solid metallic disk. The disk is rotated at high revolutions per minute rate (rotation rate at around 800 revolutions per minute) to ensure sufficient renewal of the material at the laser interaction site.

During the plasma and the laser pulse interaction step, the number of pre-pulses may function to expand the material and thereby achieve the optimal density of material interacting with the main pulse. The pre-pulses may also initiate generation of plasma, which could be further used for interaction with the main pulse. The main pulse interacts with the expanded material and/or generated plasma by accelerating the electrons and leading to short-wavelength radiation **8** generation. In the case of X-ray generation, the material characteristic X-ray K_{α} lines are generated on top of the broadband *Bremsstrahlung* spectrum.

**Conditioning EUV / X-ray radiation.** The generated short-wavelength radiation **8** is guided to the collection or diagnostics setup **9.** The collection or diagnostics setup **9** may include EUV or X-ray reflective or refractive optical components, such as multilayer mirrors, Fresnel zone plates, compound refractive lenses, waveguides, capillary optics, and others. The collection or diagnostic setup may include a EUV / X-ray spectrometer, a number of filters, a sample chamber, or others. Target **7** and collection and diagnostics setup **9** may be placed in ambient conditions or a vacuum chamber. In an example embodiment, the main pulse intensity may be below ~ 2 x 10¹⁴ W/cm² to avoid reaching air ionization threshold, when X-ray generation efficiency is clamped because of the self-focusing and photoionization [15]. Therefore, the light can be focused onto the sample under ambient conditions without a vacuum applied.

**Embodiments and experiments.** One example embodiment may include a sample and a spectrometer at collection or diagnostics setup **9.** The spectrometer may use a thermoelectrically cooled Si-PIN junction detector in a single photon counting regime. The sample to be probed by the generated short-wavelength radiation **8** may be placed near target **7.** As the short-wavelength radiation **8** is emitted in a full 4π solid angle, placing a sample and a spectrometer near a target **7** plane enables sufficient collection of the short-wavelength radiation **8** into the entrance aperture of the spectrometer. The high repetition rate of the incident pulses (small burst period t₀) allows one to decrease the spectrometer integration time. This increases the acquisition speed, which is of great interest for EUV / X-ray spectroscopy applications.

One example embodiment may include a pump-probe spectrometer at the collection or diagnostics setup **9.** The spectrometer may be configured in a pump-probe fashion, exploiting the ultrashort pulse origin both of the short-wavelength radiation **8** and the infrared regenerative amplifier **2** output pulses. A part of the regenerative amplifier **2** burst output may be frequency-doubled, therefore, the burst pulses with 1 to 10 energy ratio would result in 1 to 100 energy ratio between the pulses, leading to nearly single pulse visible light pulse. A similar procedure may be performed in an optical parametric amplifier. This frequency unchanged, frequency-doubled, or optically parametrically frequency changed light may act as a pump pulse, which is time advanced or delayed and transmitted through the sample placed close to the target **7.** Target **7** is simultaneously radiated by the remaining part of the regenerative amplifier **2** output **3** and the short-wavelength radiation **8** is transmitted through the sample, acting as a probe pulse. By monitoring the spectrum, energy, or the diffracted beam distribution, the pump-probe EUV / X-ray spectroscopy could be performed.

One example embodiment may include a sample and a CCD camera coupled with an X-ray-sensitive scintillator layer at the collection or diagnostics setup 9. If the beam is focused to a small spot size (for 1030 nm wavelength close to the diffraction-limited ~1 µm) at the target **7,** the generated short-wavelength radiation **8** may have sufficient spatial coherence after some propagation length to enable phase-contrast imaging of the sample. Transversal spatial coherence length could be calculated by*L*_{⊥} = *λ*/(*Rs*), where *λ* is generated short-wavelength radiation **8** wavelength, *R* - distance from the target **7** to the sample **9,** s - spot size of the generated short-wavelength radiation **8** [13]. With diffraction-limited spot size of ~1 µm, 0.1 nm wavelength, and 1 meter distance from the sample, the calculated spatial coherence length is 100 µm. This coherence length would allow phase-contrast imaging for spatial phase differences caused by the sample density variations, which have dimensions smaller than the transversal coherence length. Larger generated spot sizes (from diffraction-limited spot size up to 300 µm) could be used if a smaller coherence length could be exploited. Increasing spot size even further decreases the intensity and lowers the generated short-wavelength radiation **8** yield. If the pulse energy is increased simultaneously with the beam spot size to keep the intensity constant, the larger mode size favours different plasma dynamics and plasma temperatures, allowing control of the generated short-wavelength radiation **8** spectral content.

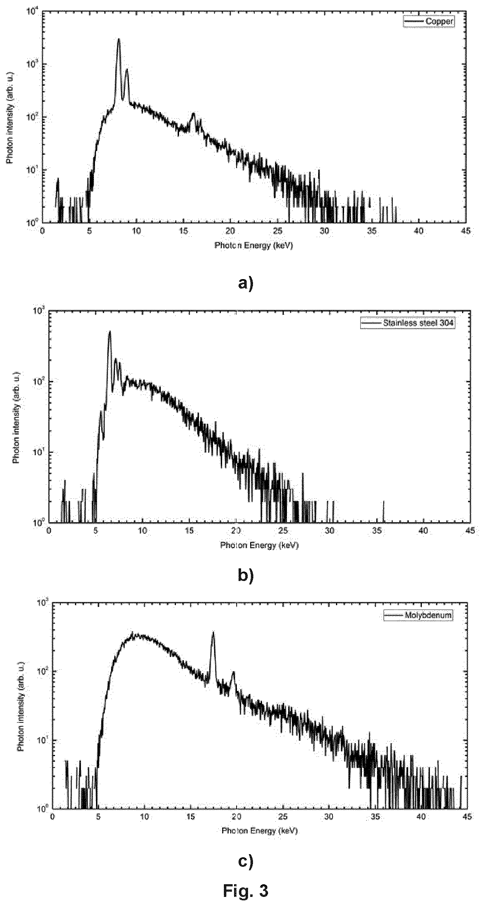

One example embodiment uses the output pulse sequence **4** with such laser parameters: central wavelength of 1030 nm, pulse duration of 250 femtoseconds, the burst period t₀ of 10 µs (100 kHz repetition rate), two pulses in the burst, T_{RA-OSC} = 400 ps pulse delay between the two pulses in a burst. The pre-pulse is emitted with 90 µJ pulse energy and the main pulse follows it with 800 µJ pulse energy, leading to a ratio of ~10 between the main pulse and the pre-pulse energies. A laser is focused to a spot size diameter of 45 µm into the target plane. The resulting driving intensity at the target plane is 380 TW/cm². The target is based on a rotating disk geometry to renew a spot size after each shot with a speed of 800 RPM. A number of different metallic target materials are used, each emitting its characteristic X-ray pattern. A 5-50 keV sensitive spectrometer at the diagnostics setup **9** is used to collect emitted short-wavelength radiation **8** spectra. The collected spectra are shown in Fig. 3A to Fig. 3C, where a collection of materials are used: stainless steel, molybdenum, copper. A filter made of Al foil is used to prevent saturation of the detector. A spectrometer is placed at a 140 cm distance from the target.

As is evident from the figures, the obtained X-ray spectrum contains both continuous *Bremsstrahlung* contribution and characteristic K_{α} and K_{β} lines.

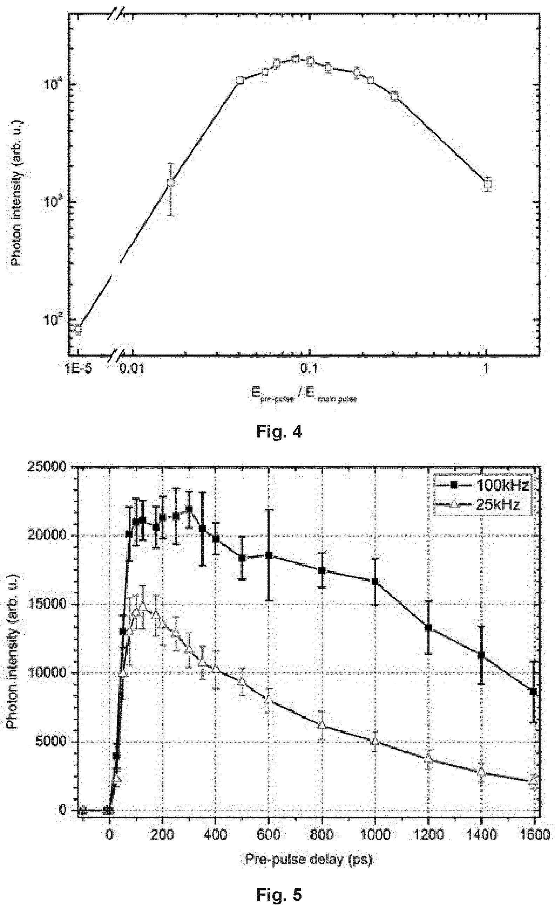

One important factor to optimize for the most optimal short-wavelength radiation **8** generation is the ratio of the main pulse and pre-pulse amplitudes. The experimentally measured dependence of the generated X-ray short-wavelength radiation **8** on the ratio of the main pulse to the pre-pulse energy is shown in Fig. **4****.** The time delay T_{RA-OSC} between the pulses in a burst is fixed at 400 ps. An optimal pulse energy ratio leads to more than 250 times of short-wavelength radiation **8** generation improvement when compared to a single pulse generation efficiency. If the pre-pulse energy is too low, no pre-pulse effect, such as plasma formation, could be initiated. If the pre-pulse energy is too high, the generation efficiency drops. One possible explanation of this effect could be based on work by Fujimoto et al. [12]. With an increase of the pre-pulse energy, the generated plasma expansion speed is increased. With an increase in the plasma speed, the main pulse overlaps with the decreased density plasma cloud. As the pre-pulse to the main pulse delay and the beam diameters are fixed, there exists an optimal plasma cloud density for the most efficient plasma generation efficiency. As can be seen from Fig. 4, the window of efficient generation is quite broad, 2 % to 50 % of the main pulse energy should be delivered to the pre-pulse. The optimal value of pre-pulse to main pulse energy is around 10 %. Since this number may depend strongly on the experimental conditions (ambient pressure, target material, focusing, etc.), it is important to be able to adjust it for each usage case, which is ensured by the type of laser source described.

Another factor to optimize for the most optimal short-wavelength radiation **8** generation is the pulse delay Δ*t* between the main pulse and several pre-pulses. To test this, a setup was assembled with polarizing beamsplitters, two mirrors, and a delay line. Solid iron was used as a target **7.** A single pulse was generated out of the regenerative amplifier **2, split** to form a pre-pulse and both of the pulses were recombined using a polarizing beam splitter. This setup leads to 40 % energy loss and 550 µJ total energy of the burst. The experimentally measured dependence of the generated X-ray short-wavelength radiation **8** on the pulse delay of the main pulse to the pre-pulse energy is shown in Fig. 5. The amplitude ratio of the pre-pulse to the main pulse is fixed at 10 %. One important observation is an optimal delay time between the pulses, which yet again produces more than 250 times of short-wavelength radiation **8** generation improvement, compared to the single pulse generation efficiency. Similarly to the dependence on the main to pre-pulse energy ratio, if the pre-pulse delay is very small and the pre-pulse is nearly matched to the main pulse, no pre-pulse effect, such as plasma formation, could be initiated. If the pre-pulse delay relative to the main pulse is too large, the generation efficiency drops. Explanation of this effect could be based on work by several authors [12, 15-17]. With an increase of pre-pulse delay, the generated plasma propagates increased distances and leads to a lower plasma density. With a decrease in the plasma density, the main pulse absorption at plasma is decreased. As the pre-pulse to the main pulse energy ratio and the beam diameters are fixed, there exists an optimal plasma cloud density for the most efficient plasma absorption and EUV / X-ray generation efficiency. This leads to an optimal pre-pulse delay Δ*t* of 100 to 200 picoseconds for our experimental intensity of 230 TW/cm² (driving pulse energy of 490 µJ, width of 250 femtoseconds and beam spot size diameter of 45 µm). The femtosecond-picosecond pulse duration driving pulses induce plasmas with fast propagation speeds, therefore, small pulse delays in the range of hundreds of picoseconds are required. As shown in Fig. 5, an increase of the repetition rate leads to slightly increased optimal delay times, as increased repetition rate changes plasma dynamics. The whole experimentally measured pre-pulse delay Δ*t* range of 10 ps to 1600 ps leads to an increase of the generated short-wavelength radiation **8.** The short-wavelength radiation **8** generation regime was tested in nanosecond burst generation mode when pulses were emitted out of the regenerative amplifier **2** cavity after each regenerative amplifier **2** pass with ~14 nanosecond delay between the pulses. No increase of the generated short-wavelength radiation **8** was observed in that case. Therefore, an increase of the short-wavelength radiation **8** diminishes at below 14 ns delay time, approximately 10 nanoseconds being a vanishing point as given by an exponential fit to the Fig. 5 measurement data of 25 kHz.

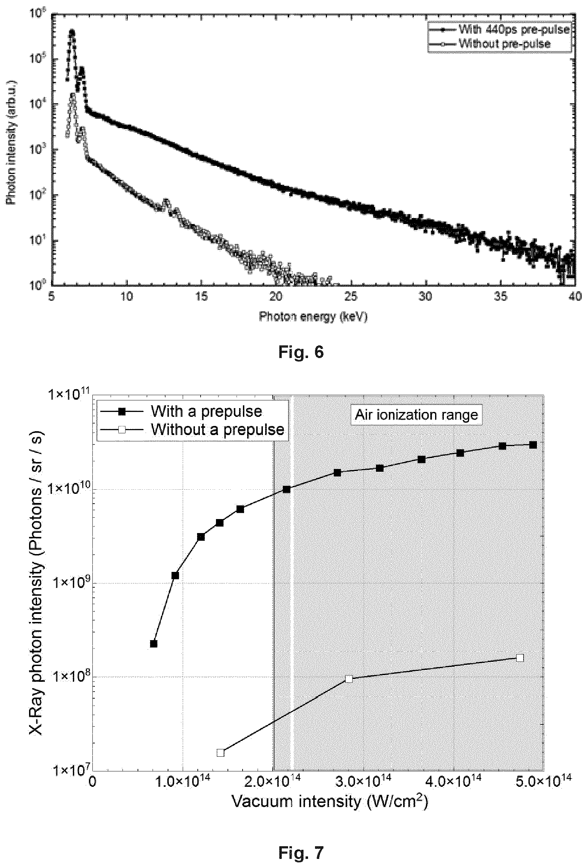

Fig. 6 shows the measured soft and hard X-ray spectra of one example embodiment in both a single pulse and a pair of pre-pulse and the main pulse cases. Regenerative amplifier and oscillator arrangement is used in the experiment with pulse delay Δ*t* = T_{RA-OSC}. The pre-pulse to the main pulse energy ratio is 10 %, the time delay T_{RA-OSC} between the pulses in a burst is 400 picoseconds. As can be seen from the spectra, the pre-pulse and main pulse arrangement leads to an increased high energy X-ray content, which would be highly desirable for X-ray imaging applications of thick, dense, or absorbing samples.

Fig. 7 shows one example embodiment of the measured absolute photon intensity (photons per second per solid angle) and infrared to X-ray energy conversion efficiency dependence on the driving pulse intensity in both a single pulse and a pair of pre-pulse and the main pulse cases. The pre-pulse to the main pulse energy ratio is 10 %, the time separation T_{RA-OSC} between the pulses in a burst is 400 picoseconds. The graph shows high absolute soft and hard X-ray photon intensity reaching 3 x 10¹⁰ photons sr⁻¹ s⁻¹ with the calculated energy conversion efficiency of 10⁻⁴, which is a large figure greatly enhanced by the deliberately shaped pre-pulse. The graph shows that at the driving intensities of approximately ~ 2 x 10¹⁴ W/cm², the generated X-ray starts to saturate because of the nonlinear focusing and ionization of air. This figure is close to the one theoretically calculated by Garmatina *et al.* [15]. Even higher driving intensities would saturate the generated X-ray and further X-ray output increase would not be possible without an applied higher ionization potential gas, as shown by Garmatina *et al.* [15] or vacuum, which enables to increase the driving intensity, or increased spot size which increases X-ray source size. This graph clearly shows that in an ambient atmosphere a single pulse would not provide the high X-ray yield given by two pulses.

Further scaling of the ambient atmosphere short-wavelength radiation **8** generation process could be predicted based on the air clamping intensity threshold around 2 x 10¹⁴ W/cm². Pulse duration of 250 fs and pulse energy of 1 mJ limits the beam size at the target **7** plane to 65 µm. A common ultrafast slab type laser output energy limit is around 20 mJ, which leads to the beam size of up to 300 µm at the target **7** plane for a given air clamping intensity. These larger beam sizes could be preferred to favour particular plasma dynamics or plasma temperature to selectively generate short-wavelength radiation **8** at a needed spectral band. On the other hand, having large energy handling capacity, slab type lasers are limited to around 0.2 kW of average power and this limits the achievable repetition rate to 200 kHz at 1 mJ pulse energy or to 10 kHz at 20 mJ pulse energy. Smaller pulse energy and higher pulse repetition rate regime could be exploited by using fiber amplifier laser architecture. The internal laser pulse modulators would allow up to 20 MHz switching speed, which would lead to the same pulse burst repetition speed. To keep the laser output average power below 1 kW, smaller laser output energies below 50 µJ would be used. Nevertheless, smaller energy and smaller generation efficiency of the short-wavelength radiation **8** would be compensated by a high repetition rate of the process.

Further scaling could as well be considered if vacuum atmosphere at the target **7** is applied. In this case, the maximum applied intensity would not be limited by air clamping and would be limited by complex geometry of the affected target **7** volume, nonlinear effects of pulse reabsorption and the pulse energy, achievable by the laser architecture. Pulse energies as large as 250 mJ could be reached by using the thin disk laser amplifier architecture. Simultaneous repetition rate and pulse energy increase would require large laser output power, which again could be achieved by the thin disk laser technology, which reaches more than 1 kW output power at pulsed regime and more than 20 kW in continuous wave regime.

Another way of increasing the intensity would be the decrease of the pulse duration. A choice of the gain material determines the available bandwidth and the pulse duration of the compressed pulse. Nonlinear pulse broadening of the output **3** after the regenerative amplifier **2** may broaden the spectum and lead to shorter pulse widths. The minimum pulse duration would be limited by the efficiency process of the nolinear broadening and the dispersion of the delivery optics, which tend to largely broaden the pulse for pulse durations below 20 femtoseconds. On another end, partially compressed output of the laser amplifier could be used at the short-wavelength radiation **8** generation process. Detuning the compressor may allow pulse duration tuning at largerly varying tuning range from transform-limited 250 femtoseconds to 50 picoseconds, dependent on exact compressor configuration. Uncompressed regenerative amplifier **2** output **3** may lead to the 50 picoseconds - 1000 picoseconds pulse duration range, dependent on the strecher configuration. These longer pulse durations could be preferred to favour particular plasma dynamics or plasma temperature to selectively generate short-wavelength radiation **8** at the required spectral band. On the other hand, long pulse durations would require large driving pulse energies to reach the same intensity and keep the short-wavelength radiation **8** generation process efficient. Long pulse durations would as well lead to larger optimal pulse separation times Δ*t.*

As can be seen from Fig. 5, with ~250 femtosecond pulse duration driving pulses the optimal delay between the pre-pulse and the main pulse is at the range of hundreds of picoseconds. This makes our approach of the near-matched length oscillator **1** and regenerative amplifier **2** pair superior compared to the approach when seed pulses are pulse picked before the amplification to form the required pulse train. The named approach requires a pulse picker with a very steep rise time, shorter than the delay time between pulses in the range of hundreds of picoseconds. Such a rise time is hard to implement practically with a good pulse to pulse contrast. Our approach leads to a relaxed speed constraint for the modulator-induced polarization change between the burst pulses in regenerative amplifier **2.** When the burst of two pulses is formed and the second pulse is injected into the regenerative amplifier **2.** the voltage change could be implemented during the regenerative amplifier **2** round trip time t_{RA}, which is in the range of tens of nanoseconds. Additionally, complete polarization switching is not required. This leads to a lower voltage difference between the two states, a smaller current, and faster switching time.

Our approach is also superior compared to the one when beam splitters are used to separate the amplified pulses in time and recombine the beams together through the 50/50 beam splitter. If the same polarization of the pre-pulse and the main pulse are required (this is a case for a non-zero angle of incidence to the target), the recombined pulses lose 50 % energy. Both beam paths need to be separately aligned to ensure the overlap of the beams at the target plane. Scaling this solution to produce more than two pulses results in significantly greater complexity of the beam delivery system. Also, since the beams propagate to the target along different trajectories, their overlap becomes sensitive to the mechanical vibrations of the delivery system, induced, e.g. by the target renewal device. These problems are avoided in our approach when both the pre-pulse and the main pulse originate from the same regenerative amplifier **2** cavity or a burst generation unit **16** is used before the master amplifier **17.**

Another important advantage of our invention is the inherent simplicity in the short-wavelength radiation **8** generation process. By choosing an optimal main pulse to pre-pulse delay time and main pulse to pre-pulse energy ratio, the short-wavelength radiation **8** generation efficiency is increased by more than 250 times, therefore, the driving energies could be decreased leading to a comparably low energy driving regime (< 1 mJ). As the energies are below an air ionization threshold, a vacuum near the target is not needed. This especially simplifies the setup for the soft and hard X-ray range, because ambient air is relatively transparent to these wavelengths. Ambient atmosphere also inhibits debris generation, which would otherwise be deposited on optical components and would lead to the decrease of the whole system lifetime. What is more, separate beam alignment of the pre-pulse and the main pulse and pulse delay management is not required. The laser output could be delivered straight to target **7,** and the target **7** could be physically based in a separate from the laser system place where short-wavelength radiation **8** could be used.

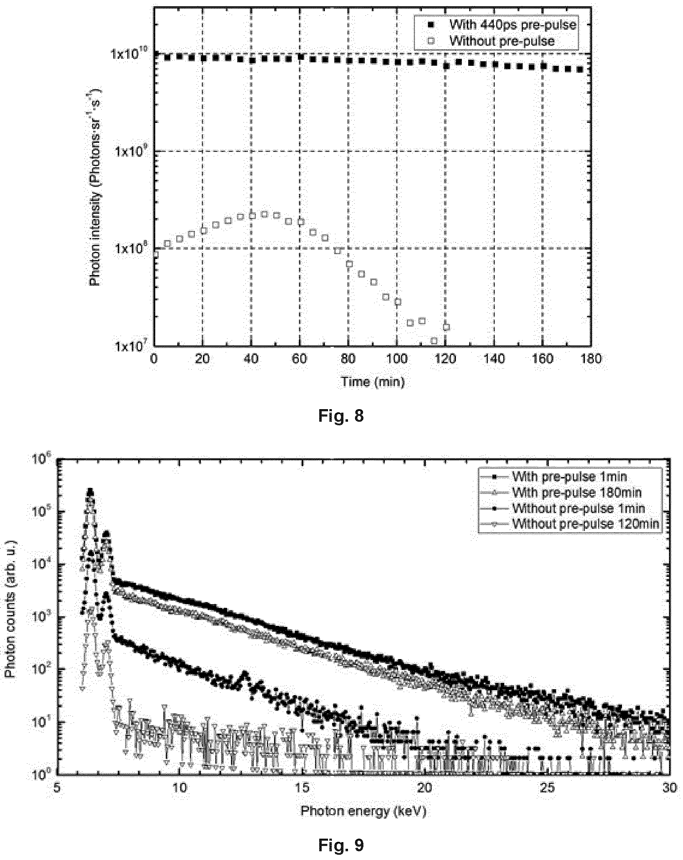

Another important parameter is the lifetime of the target **7** under high-intensity femtosecond laser illumination. The bursts of pulses produce milder ablation of target **7,** therefore, target **7** is conserved and the generation could be produced stably with a rotating target **7** geometry. Example measurement of long term stability of the generated soft and hard X-ray short-wavelength radiation **8** is shown in Fig. 8 in two operating regimes: a) a single 900 µJ pulse is focused on the sample; b) a pre-pulse and main pulse pair are formed with T_{RA-OSC} = 400 ps delay between the pulses in a burst and 10 % pre-pulse to the main pulse energy ratio, the packet energy is 900 µJ. In both cases, iron target **7** is irradiated with 380 TW/cm² intensity. The target is rotated at 800 RPM rotational speed. As can be seen from the figure, the two pulse regime not only provides nearly three orders of the X-ray photon intensity increase but also leads to significantly better short-term stability and substantially increases a target **7** lifetime. Poor short-term stability in the single pulse case is linked to the pronounced ablation of the material and change of the surface properties, such as an effective area, which governs the light absorption properties. In a single pulse case, the generated soft and hard X-ray **8** intensity abruptly increases because of surface modification and abruptly drops because of the surface ablation. In the two-pulse case, the pre-pulse generates plasma, which efficiently absorbs the main pulse energy and effectively shields the target **7.** The collected soft and hard X-ray short-wavelength **8** spectra long-term stability is shown in Fig. 9. One example embodiment application of the X-ray spectroscopy would largely benefit from such a short-term and long-term generated soft and hard X-ray short-wavelength **8** stability.

Different mode sizes and target geometries may require various pulse sequences. In one embodiment, a larger number of pre-pulses with picosecond time scale pulse delay between the pulses in the burst can be generated to increase the short-wavelength radiation **8** generation efficiency. The first pre-pulse may shape the target surface to increase the absorption coefficient of the target **7,** further, pre-pulses may induce the plasma which interacts with the main pulse. These pulses may be shaped by injecting several oscillator **1** pulses into the regenerative amplifier **2** with a time delay T_{RA-OSC} between the pulses.

In another embodiment, the pulses are generated with picosecond time scale pulse delay T_{RA-OSC} between the pulses in a burst and nanosecond time scale pulse delay t_{RA} between the bursts. The bursts are amplified in the regenerative amplifier **2** during the cavity dumping time and emitted from the regenerative amplifier **2** cavity after each regenerative amplifier **2** round trip. This embodiment with an example case of 2 pre-pulses and one main pulse in a burst is shown in Fig. 2. An example case is shown of two bursts with a nanosecond time scale pulse delay between the bursts.

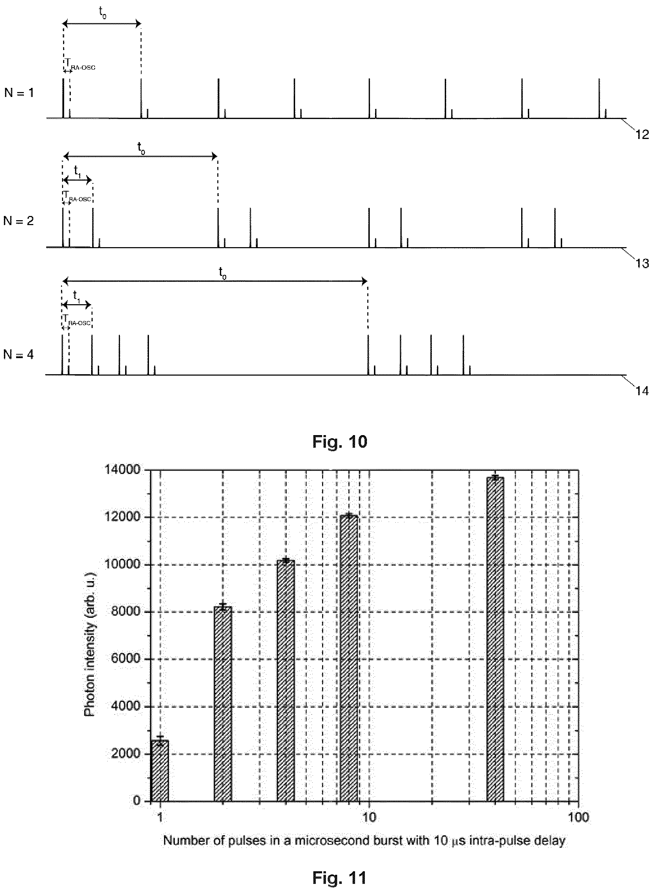

In another embodiment, the pulses are generated with picosecond time scale pulse delay T_{RA-OSC} between the pulses in a burst and microsecond time scale pulse delay t₀ between the bursts. As microsecond time scales are long, the burst is amplified in the regenerative amplifier **2** during a cavity dumping time and emitted afterward. The bursts may be shaped into a burst packet without the change of the pulse sequence average power. One example of a burst packet shaping sequence is shown in Fig. 10. Sequence without the burst packet shaping is shown as N = 1 pulse sequence **12,** having t₀ pulse delay between the bursts. In N = 2 pulse sequence **13,** two bursts in a pulse sequence are shaped into burst packet with t₁ pulse delay between the bursts and t₀ pulse delay between the burst packets. In N = 4 pulse sequence **14,** four bursts in a pulse sequence are shaped into a burst packet with t₁ pulse delay between the bursts and t₀ pulse delay between the burst packets. The number N of the pulses is not limited to the disclosed embodiment. Fig. 11 shows an example experimental X-ray radiation generation **8** conversion efficiency increase, because of the burst packet shaping with 10 µs between the bursts. Even though the average power is the same, the plasma dynamics favor not only the pre-pulse and the main pulse picosecond time scale delay, but also the burst packet deliberately shaped in the microsecond time scale. The disclosed oscillator **1** and regenerative amplifier **2** arrangement allows one to simultaneously access the picosecond time scale pulse delay between the pulses in the burst and the deliberately shaped burst packets with microsecond time scale pulse delay between the packets. Such a pulse sequence can be hardly implemented with other arrangements, such as a beam splitter and a delay line setup for pre-pulse formation.

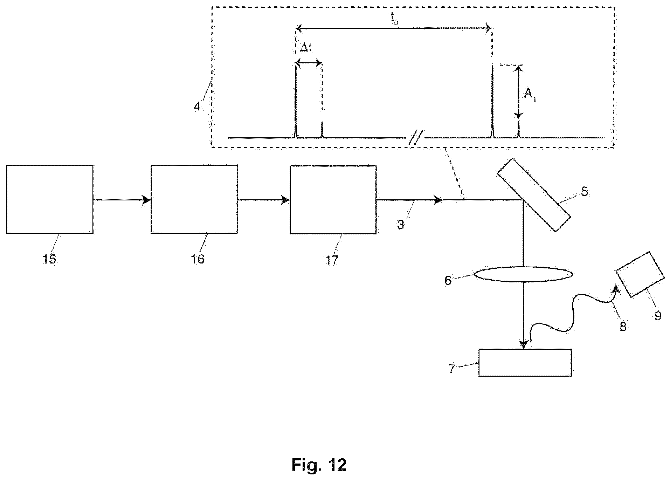

In another embodiment, the pulses are generated with picosecond - nanosecond time scale pulse delay Δ*t* between the pulses in a burst while using an oscillator **15** with a burst generation unit **16** and a master amplifier **17** approach. This embodiment is shown in Fig. 12. Chirped pulse amplification may by used to limit the nonlinearity of the components, the stretcher and compressor elements are not shown. Beam delivery, short-wavelength generation and conditioning components **3** to **9** are explained in the description of Fig. 1. An oscillator **15** may include fiber or solid state oscillator, emitting ultrashort pulses with a constant pulse period τ_{osc}, dependant on a cavity round trip duration. In one embodiment, burst generation unit **16** includes fiber circulator with fiber coupler which acts as a 50/50 or other proportionallity ratio coupler, which reflects and forms a secondary pre-pulse. Fiber circulator has a round trip duration τ_{FC}. Length difference between the oscillator **15** and a fiber circulator leads to a delay Δ*t* = τ_{osc} - τ_{FC} between the pre-pulse and main pulse. The burst generation unit **16** may include active gain fiber segment and / or active modulator to shape the pulse sequence or vary the main pulse to the pre-pulse energy ratio A₁. Larger number of pre-pulses may as well be generated by using this approach, for example by using short length fiber circulator (τ_{FC} << τ_{osc}), which delays a pulse and forms a series of pulses with intrapulse delay of τ_{FC}. Such an approach would have a limitation of a minimal achievable pre-pulse to main pulse delay of around 300 ps, linked to minimum spliceable bare fiber length of around 50 mm, of which two segments are needed. The burst generation unit **16** may include dispersion compensation in the form of chirped fiber bragg grating to ensure the temporal similarity of all the pulses in the burst.

In another embodiment, burst generation unit **16** includes a free space 50/50 or other proportionallity ratio beam splitter or polarizer to split the pulse to two pulses, each propagating different optical path lengths. Afterwards, the pulses are recombined with the same of another beam splitter or polarizer with power losses for each of the pulse. The induced optical delay Δ*t* between the pulses is proportional to the delay difference between the two optical path lengths. Adding more coupler pairs leads to an increasing number of pre-pulse to main pulse pairs. The individual optical path length segments may include active gain elements, active modulators, active polarization rotation elements to shape the pulse sequence or vary the main pulse to the pre-pulse energy ratio A₁. The individual optical path lengths may also include the delay line to actively change the pre-pulse to main pulse delay. The sequence of pulses are guided to the master amplifier **17** to boost the output power of the generated pulse sequence.

In another embodiment, burst generation unit **16** includes a pair of 50/50 or other proportionallity ratio fiber couplers. The first of the couplers splits an input pulse to two pulses, each of which propagate through different fiber segments having different lenghts. The second of the couplers combines the pulses together to form the pre-pulse and main pulse pair with delay Δ*t* between the pulses, where Δ*t* is the delay difference between the two fiber segments. Adding more coupler pairs leads to an increasing number of pre-pulse to main pulse pairs. The individual fiber segments may include active gain fibers, active modulators to shape the pulse sequence or vary the main pulse to the pre-pulse energy ratio A₁. The sequence of pulses are guided to the master amplifier **17** to boost the output power of the generated pulse sequence.

In another embodiment, the oscillator **15** is a semiconductor laser with a fast current modulation capability. Fast current modulation allows generation of small power nanosecond pulse duration pulses. These pulses are guided to the burst generation unit **16,** which includes a fast phase modulator and a spectral filter. Fast phase modulation transfers to a rapid change of the carrier frequency and results in a spectral broadening of the pulses. Spectral filter removes one sideband of the newly generated spectral components and results in a sequence of pulses in a time domain, with pulse duration dependant on the spectral broadening induced by the phase modulator, or in other words modulation frequency. An example modulation frequency of ~2 GHz would lead to around 50 ps pulse duration pulses. These pulses are formed under an envelope of the nanosecond pulses, generated by the modulation of current, therefore leading to simultaneous picosecond and nanosecond time domain burst. The sequence of pulses are guided to the master amplifier **17** to boost the output power of the generated pulse sequence.

In all before mentioned embodiments involving burst generation unit **16,** the pulses may as well be picked or shaped by using an additional modulator after the burst generation unit **16** and before the master amplifier **17.** One drawback of a fiber based master amplifier **17** method is that fiber architecture limits extractable pulse energies, which are needed for efficient short-wavelength radiation **8** generation. Therefore, multiple fibers could be coherently combined to yield the needed output energy at the last master amplifier **17** stage. The master amplifier **17** could as well be realized in a free-space setup to achieve higher output pulse energies, in the form of multipass amplifier or regenerative amplifier. If a smaller X-Ray photon flux is needed, a single large mode area fiber could be realized as a master amplifier **17.** The coherent beam combining system could as well be exploited in a regime when time delay of the coherently combined pulses is deliberately mismatched. If polarization coupling is used, the time mismatch would lead to a loss of interference and result in a pre-pulse and main pulse pair with orthogonal polarizations. Therefore, this approach would not be generally applicable for the short-wavelength radiation **8** generation applications with a non-zero angle of incidence at the target **7.**

Provided data of example experiments should not limit the scope of the invention, as those skilled in the art can use the knowledge and common skills to configure the optical arrangement or pulse parameters, but still use the key principle of this invention.

### LIST OF NON-PATENT CITATIONS

[1] M. Chergui et al. "Electron and X-Ray Methods of Ultrafast Structural Dynamics: Advances and Applications", Chem Phys Chem, 10, 28-43 (2009).
[2] O. Versolato, "Physics of laser-driven tin plasma sources of EUV radiation for nanolithography", Plasma Sources Sci. Technol., 28, 083001 (2019).
[3] Bastiani et al. "Experimental study of the interaction of subpicosecond laser pulses with solid targets of varying initial scale lengths", Physical Review E (1997).
[4] V. Remeikis et al. "Generation of plasma X-ray sources via high repetition rate femtosecond laser pulses", Applied Physics B (2017).
[5] Sentis et al. "High photon flux Kα Mo x-ray source driven by a multi-terawatt femtosecond laser at 100 Hz", Optics Letters (2018).
[6] B. A. M. Hansson et al. "A Liquid Xenon-Jet Laser-Plasma X-Ray and EUV Source", Microel. Engin. (2000).
[7] L. Rymell et al. "Liquid-jet target laser-plasma sources for EUV and X-ray lithography", Microelectronic Engineering (1999).
[8] L. Rymell et al. "Debris elimination in a droplet-target laser plasma soft x-ray source", Review of Scientific Instruments (1995).
[9] K. Hatanaka et al. "X-ray pulse emission from cesium chloride aqueous solutions when irradiated by double-pulsed femtosecond laser pulses", Applied Physics Letters 93, 064103 (2008).
[10] D. S. Uryupina et al. "Femtosecond laser-plasma interaction with prepulse-generated liquid metal microjets", Phys. Plasmas 19, 013104 (2012).
[11] Ch. Ziener et al. "Novel device for the generation of controlled prepulses in a Ti: sapphire laser amplifier chain", Review of Scientific Instruments 71, 3313 (2000).
[12] L. Yin et al. "Using temporally Synthesized laser pulses to enhance the conversion efficiency of Sn plasmas for EUV lithography" IEEE Photonics Journal, 13(1), 1700115 (2021).
[13] J. Fujimoto et al. "Development of Laser-Produced Tin Plasma-Based EUV Light Source Technology for HVM EUV Lithography", Physics Research International, 249495 (2012).
[14] M. Gambari et al. "Exploring phase contrast imaging with a laser-based Ka X-ray source up to relativistic laser intensity", Scientific Reports 10, 6777 (2020).
[15] A. A. Garmatina et al. "Intensity clamping and controlled efficiency of X-ray generation under femtosecond laser interaction with nanostructured target in air and helium", J Phys.: Conf. Ser. 1692 012004.
[16] T. Donnelly et al. "Plume dynamics in femtosecond laser ablation of metals", AIP Conf. 1278, 643 (2010).
[17] S. Noel et al. "Reducing nanoparticles in metal ablation plumes produced by two delayed short laser pulses", Appl. Phys. Lett. 94, 053120 (2009).

## Claims

1. A method for generating X-ray range electromagnetic, EM, radiation (8) using a laser source to irradiate a target material (7), wherein
• the target (7) is irradiated from the laser source by a pulsed laser beam (3) comprising a burst of at least two pulses separated by a time delay Δ*t,* wherein
- the first pulse is one pre-pulse for generating plasma on the target (7), and
- the second pulse is a main-pulse for generating said EM radiation (8) from said plasma,
• where the generated EM radiation (8) is used or measured (9) as a photon flux, **characterized in that**
• the laser source comprises an ultrashort pulse oscillator (1) with a pulse repetition period *T_{OCS},* a regenerative amplifier RA (2) with a pulse-round-trip time *T_{RA}* and a pulse modulator (2) which is an electro-optical switch within the regenerative amplifier (2), arranged to generate the pulsed laser beam (3) with the burst comprising the pre-pulse and the main pulse, wherein all pulses within the burst separated by the time delay Δ*t=*|*T_{RA}-T_{OCS}*| and inherently matching beam sizes, divergences, polarizations, positions and directions of all the pulses in the generated laser beam (3), wherein said electro-optical switch is configured and operated to inject from the pulse oscillator (1) more than one pulse into the RA (2) whereby controlling energy ratio of the injected pulses, to amplify the injected pulses within the RA (2), and to eject the amplified burst from the RA (2), and
• wherein
∘ said time delay Δ*t* between the all pulses within the burst is selected in the range from 50 picoseconds to 1600 picoseconds,
∘ a ratio of the one pre-pulse energy to the energy of the main-pulse is controlled in range from 0.02 to 0.5,
∘ a duration of each of all pulses within the burst is less than the time delay Δ*t* between the pulses,
• the focused beam (3) diameter at the target (7) is in the range from a diffraction-limited spot size to 300 µm.

2. The method of claim 1, **wherein** the central wavelength of the pulses in the burst is selected from the range of 200 nm to 16000 nm.

3. The method of claims 1 to 2, **wherein** the burst comprises more than one pre-pulse separated by the time delay Δ*t.*

4. The method of claims 1 to 2, **wherein** the ratio of energies of the pre-pulse and of the main-pulse is 0.1.

5. The method of claims 1 to 4, **wherein** the target (7) is solid.

6. The method of claims 1 to 5, **wherein** the target (7) is placed at an ambient atmospheric pressure.

7. The method of claims 1 to 5, **wherein** the generated EM radiation (8) is reflected or collected with an additional optical arrangement to increase the flux of the generated EM radiation (8).

8. The method of claims 1 to 5, **wherein** the generated EM radiation is transmitted through the sample (9) and the spectrum, energy, or diffracted spatial distribution of the short-wavelength radiation is monitored after the sample (9).

9. The method of claims 1 to 5, **wherein** the main pulse intensity is adjusted below 2 ×10¹⁴ Wcm⁻², to avoid reaching air ionization threshold.

10. A device for generating X-ray range EM radiation (8) by the method according to claims 1 to 9, wherein the target material (7) is irradiated by the laser source,
**characterized in that**
- the laser source comprises the ultrashort pulse oscillator (1) with a pulse repetition period *T_{OCS},* the regenerative amplifier RA (2) with a pulse-round-trip time *T_{RA}* and the pulse modulator, which is an electro-optical switch within the regenerative amplifier (2), arranged to generate the pulsed laser beam (3) with the burst comprising the pre-pulse and the main pulse, wherein all pulses within the burst are separated by a time delay Δ*t=*|*T_{RA}-T_{OCS}*|*,* and inherently matching beam sizes, divergences, polarizations, positions and directions of all the pulses in the generated laser beam (3), wherein said electro-optical switch is configured and operated to inject from the pulse oscillator (1) a more than one pulse into the RA (2) whereby controlling energy ratio of the injected pulses, to amplify the injected pulses within the RA (2), and to eject the amplified burst from the RA (2), and
- wherein
∘ said time delay Δ*t* between the all pulses within the burst is selected in the range from 50 picoseconds to 1600 picoseconds,
∘ a ratio of the pre-pulse energy to the energy of the main-pulse is in range from 0.02 to 0.5,
∘ a duration of each of all pulses within the burst is less than the time delay Δ*t* between the pulses,
- the focused beam (3) diameter at the target (7) is in the range from a diffraction-limited spot size to 300 µm.

11. The device according to claim 10, **wherein** the target (7) has a rotating geometry.

## Patentansprüche

1. Verfahren zum Erzeugen elektromagnetischer Strahlung, EM-Strahlung (8), eines Röntgenbereichs unter Verwendung einer Laserquelle, um ein Zielmaterial (7) zu bestrahlen, wobei
• das Ziel (7) aus der Laserquelle durch einen gepulsten Laserstrahl (3), umfassend einen Burst mindestens zweier Impulse, bestrahlt wird, die durch eine Zeitverzögerung Δ*t* getrennt werden, wobei
- der erste Impuls ein Prä-Impuls zum Erzeugen von Plasma auf dem Ziel (7) ist und
- der zweite Impuls ein Hauptimpuls zum Erzeugen der EM-Strahlung (8) aus dem Plasma ist,
• wobei die erzeugte EM-Strahlung (8) als ein Photonenfluss verwendet oder gemessen (9) wird,
**dadurch gekennzeichnet, dass**
• die Laserquelle einen Impulsoszillator (1) ultrakurzer Impulse mit einer Impulswiederholungsperiode *T_{OCS},* einen regenerativen Verstärker RA (2) mit einer Impulsumlaufzeit *T_{RA}* und einen Impulsmodulator (2), der ein elektrooptischer Schalter innerhalb des regenerativen Verstärkers (2) ist, umfasst, die dazu angeordnet sind, den gepulsten Laserstrahl (3) zu erzeugen, wobei der Burst den Prä-Impuls und den Hauptimpuls umfasst, wobei alle Impulse innerhalb des Bursts durch die Zeitverzögerung *Δt=*|*T_{RA}-T_{OCS}*| getrennt werden und mit Strahlgrößen, Divergenzen, Polarisationen, Positionen und Richtungen aller Impulse in dem erzeugten Laserstrahl (3) inhärent übereinstimmen, wobei der elektrooptische Schalter dazu konfiguriert ist und dazu betrieben wird, aus dem Impulsoszillator (1) mehr als einen Impuls in den RA (2) zu injizieren, wobei ein Energieverhältnis der injizierten Impulse gesteuert wird, um die injizierten Impulse innerhalb des RA (2) zu verstärken und um den verstärkten Burst aus dem RA (2) auszuwerfen, und
• wobei
∘ die Zeitverzögerung Δ*t* zwischen den sämtlichen Impulsen innerhalb des Bursts im Bereich von 50 Pikosekunden bis 1600 Pikosekunden ausgewählt wird,
∘ ein Verhältnis der einen Prä-Impulsenergie zu der Energie des Hauptimpulses im Bereich von 0,02 bis 0,5 gesteuert wird,
∘ eine Dauer jedes der sämtlichen Impulse innerhalb des Bursts kleiner als die Zeitverzögerung Δ*t* zwischen den Impulsen ist,
• der Durchmesser des fokussierten Strahles (3) an dem Ziel (7) im Bereich von einer beugungsbeschränkten Punktgröße bis 300 µm liegt.

2. Verfahren nach Anspruch 1, wobei die zentrale Wellenlänge der Impulse in dem Burst aus dem Bereich von 200 nm bis 16000 nm ausgewählt wird.

3. Verfahren nach Anspruch 1 bis 2, wobei der Burst mehr als einen Prä-Impuls umfasst, die durch die Zeitverzögerung Δ*t* getrennt werden.

4. Verfahren nach Anspruch 1 bis 2, wobei das Verhältnis der Energien des Prä-Impulses und des Hauptimpulses 0,1 ist.

5. Verfahren nach Anspruch 1 bis 4, wobei das Ziel (7) fest ist.

6. Verfahren nach Anspruch 1 bis 5, wobei das Ziel (7) bei einem atmosphärischen Umgebungsdruck platziert wird.

7. Verfahren nach Anspruch 1 bis 5, wobei die erzeugte EM-Strahlung (8) mit einer zusätzlichen optischen Anordnung reflektiert oder eingefangen wird, um den Fluss der erzeugten EM-Strahlung (8) zu erhöhen.

8. Verfahren nach Anspruch 1 bis 5, wobei die erzeugte EM-Strahlung über die Abtastung (9) übertragen wird und die Spektrum-, Energie- oder gebogene räumliche Verteilung der kurzwelligen Strahlung nach der Abtastung (9) überwacht wird.

9. Verfahren nach Anspruch 1 bis 5, wobei die Hauptimpulsintensität auf unter 2 x 10¹⁴ Wcm⁻² angepasst wird, um Erreichen eines Luftionisationsschwellenwerts zu vermeiden.

10. Vorrichtung zum Erzeugen einer EM-Strahlung (8) eines Röntgenbereichs durch das Verfahren nach Anspruch 1 bis 9, wobei das Zielmaterial (7) durch die Laserquelle bestrahlt wird,
**dadurch gekennzeichnet, dass**
- die Laserquelle den Impulsoszillator (1) ultrakurzer Impulse mit einer Impulswiederholungsperiode *T_{OCS},* den regenerativen Verstärker RA (2) mit einer Impulsumlaufzeit *T_{RA}* und den Impulsmodulator, der ein elektrooptischer Schalter innerhalb des regenerativen Verstärkers (2) ist, umfasst, die dazu angeordnet sind, den gepulsten Laserstrahl (3) zu erzeugen, wobei der Burst den Prä-Impuls und den Hauptimpuls umfasst, wobei alle Impulse innerhalb des Bursts durch eine Zeitverzögerung *Δt=*|*T_{RA}-T_{OCS}*| getrennt werden und mit Strahlgrößen, Divergenzen, Polarisationen, Positionen und Richtungen aller Impulse in dem erzeugten Laserstrahl (3) inhärent übereinstimmen, wobei der elektrooptische Schalter dazu konfiguriert ist und dazu betrieben wird, aus dem Impulsoszillator (1) mehr als einen Impuls in den RA (2) zu injizieren, wobei das Energieverhältnis der injizierten Impulse gesteuert wird, um die injizierten Impulse innerhalb des RA (2) zu verstärken und um den verstärkten Burst aus dem RA (2) auszuwerfen, und
- wobei
∘ die Zeitverzögerung Δ*t* zwischen den sämtlichen Impulsen innerhalb des Bursts im Bereich von 50 Pikosekunden bis 1600 Pikosekunden ausgewählt wird,
∘ ein Verhältnis der Prä-Impulsenergie zu der Energie des Hauptimpulses im Bereich von 0,02 bis 0,5 liegt,
∘ eine Dauer jedes der sämtlichen Impulse innerhalb des Bursts kleiner als die Zeitverzögerung Δ*t* zwischen den Impulsen ist,
- der Durchmesser des fokussierten Strahles (3) an dem Ziel (7) im Bereich von einer beugungsbeschränkten Punktgröße bis 300 µm liegt.

11. Vorrichtung nach Anspruch 10, wobei das Ziel (7) eine drehende Geometrie aufweist.

## Revendications

1. Procédé de génération de rayonnement électromagnétique, EM, de gamme X (8) utilisant une source laser pour irradier un matériau cible (7), dans lequel
• la cible (7) est irradiée par la source laser au moyen d'un faisceau laser pulsé (3) comprenant une salve d'au moins deux impulsions séparées par un délai temporel Δt, dans lequel
- la première impulsion est une pré-impulsion servant à générer du plasma sur la cible (7), et
- la seconde impulsion est une impulsion principale servant à générer ledit rayonnement EM (8) à partir dudit plasma,
• où le rayonnement EM généré (8) est utilisé ou mesuré (9) comme un flux de photons,
**caractérisé en ce que**
• la source laser comprend un oscillateur à impulsions ultracourtes (1) de période de répétition T_{ocs}, un amplificateur régénératif RA (2) de temps de parcours aller-retour T_{RA} et un modulateur d'impulsions (2) qui est un commutateur électro-optique dans l'amplificateur régénératif (2), agencé pour générer le faisceau laser pulsé (3) dont la salve comprend une pré-impulsion et une impulsion principale, dans lequel toutes les impulsions de la salve sont séparées par un délai temporel Δt = |T_{RA}-T_{ocs}| et des dimensions, divergences, polarisations, positions et directions intrinsèquement identiques pour toutes les impulsions du faisceau laser généré (3), dans lequel ledit commutateur électro-optique est configuré et actionné pour injecter plusieurs impulsions de l'oscillateur (1) dans le RA (2), contrôlant ainsi le rapport d'énergie des impulsions injectées, pour amplifier les impulsions injectées dans le RA (2) et pour éjecter la salve amplifiée du RA (2), et
• dans lequel
∘ ledit délai temporel Δt entre toutes les impulsions au sein de la salve est sélectionné dans la plage de 50 picosecondes à 1600 picosecondes,
∘ un rapport entre l'énergie de la pré-impulsion et l'énergie de l'impulsion principale est contrôlé dans une plage comprise entre 0,02 et 0,5.
∘ une durée de chacune des impulsions au sein de la salve est inférieure au délai temporel Δt entre les impulsions,
• le diamètre du faisceau focalisé (3) sur la cible (7) se situe dans la plage allant d'une taille de spot limitée par la diffraction à 300 µm.

2. Procédé selon la revendication 1, dans lequel la longueur d'onde centrale des impulsions dans la salve est sélectionnée dans la plage de 200 nm à 16000 nm.

3. Procédé selon les revendications 1 à 2, dans lequel la salve comprend plus d'une pré-impulsion séparée par le délai temporel Δt.

4. Procédé selon les revendications 1 à 2, dans lequel le rapport des énergies de la pré-impulsion et de l'impulsion principale est de 0,1.

5. Procédé selon les revendications 1 à 4, dans lequel la cible (7) est solide.

6. Procédé selon les revendications 1 à 5, dans lequel la cible (7) est placée à une pression atmosphérique ambiante.

7. Procédé selon les revendications 1 à 5, dans lequel le rayonnement EM généré (8) est réfléchi ou collecté avec un dispositif optique supplémentaire pour augmenter le flux du rayonnement EM généré (8).

8. Procédé selon les revendications 1 à 5, dans lequel le rayonnement EM généré est transmis à travers l'échantillon (9) et le spectre, l'énergie ou la distribution spatiale diffractée du rayonnement à courte longueur d'onde est surveillé après l'échantillon (9).

9. Procédé selon les revendications 1 à 5, dans lequel l'intensité de l'impulsion principale est ajustée en dessous de 2 × 10¹⁴ Wcm⁻², pour éviter d'atteindre le seuil d'ionisation de l'air.

10. Dispositif de génération de rayonnement EM de gamme X (8) selon le procédé selon les revendications 1 à 9, dans lequel le matériau cible (7) est irradié par la source laser,
**caractérisé en ce que**
- la source laser comprend l'oscillateur à impulsions ultracourtes (1) de période de répétition T_{ocs}, l'amplificateur régénératif RA (2) de temps de parcours aller-retour T_{RA} et le modulateur d'impulsions (2) qui est un commutateur électro-optique dans l'amplificateur régénératif (2), agencé pour générer le faisceau laser pulsé (3) dont la salve comprend une pré-impulsion et une impulsion principale, dans lequel toutes les impulsions de la salve sont séparées par un délai temporel Δt = |T_{RA}-T_{ocs}| et des dimensions, divergences, polarisations, positions et directions intrinsèquement identiques pour toutes les impulsions du faisceau laser généré (3), dans lequel ledit commutateur électro-optique est configuré et actionné pour injecter plusieurs impulsions de l'oscillateur (1) dans le RA (2), contrôlant ainsi le rapport d'énergie des impulsions injectées, pour amplifier les impulsions injectées dans le RA (2) et pour éjecter la salve amplifiée du RA (2), et
- dans lequel
∘ ledit délai temporel Δt entre toutes les impulsions de la salve est sélectionné dans la plage de 50 picosecondes à 1600 picosecondes,
∘ un rapport entre l'énergie de la pré-impulsion et l'énergie de l'impulsion principale est compris entre 0,02 et 0,5,
∘ une durée de chacune des impulsions au sein de la salve est inférieure au délai temporel Δt entre les impulsions,
- le diamètre du faisceau focalisé (3) sur la cible (7) se situe dans la plage allant d'une taille de spot limitée par la diffraction à 300 µm.

11. Dispositif selon la revendication 10, dans lequel la cible (7) a une géométrie rotative.
